# EUROPÄISCHE PATENTANMELDUNG

(11) **EP 1 918 531 A2**
(43) Veröffentlichungstag der Anmeldung: **07.05.2008**
(21) Anmeldenummer: 07118478.2
(22) Anmeldetag: 15.10.2007
(51) Int. Cl.: F01D 21/04

(54) **Sicherungsring für das Fangehäuse eines Gasturbinentriebwerks**

(30) Priorität: 06.11.2006 DE 6052498 1
(71) Anmelder: Rolls-Royce Deutschland Ltd & Co KG, 15827 Blankenfelde-Mahlow (DE)
(72) Erfinder: Schreiber, Karl, 15838, Am Mellensee (DE)
(74) Vertreter: Wablat, Wolfgang

(57) **Zusammenfassung**

Der Sicherungsring (7) für das Fangehäuse (2) eines Gasturbinentriebwerks mit einem insbesondere metallische Fanschaufeln (3) aufweisenden Fan besteht aus einem einstückigen Faserverbundring (8) mit einer an dessen zu den Fanschaufeln weisender Innenfläche angeordneten, vorzugsweise aus einzelnen, in ein duktiles Material eingebetteten Platten gebildeten keramischen Abdeckung (9), die beim Aufprall von abgetrennten Schaufelteilen entsprechend der Anordnung der versinterten Ausgangskeramikpartikel ein Rissnetzwerk bildet und dann in kleine Teilchen zerfällt und dabei einen großen Teil der kinetischen Energie des aufprallenden Schaufelteils aufnimmt. Folgeschäden am Sicherungsring werden dadurch minimiert.

## Beschreibung

Die Erfindung betrifft einen Sicherungsring aus einem Faserverbundwerkstoff für das Fangehäuse eines Gasturbinentriebwerks.

Das Gebläse bzw. die Fanschaufeln eines Gasturbinentriebwerks können durch angesaugte Fremdkörper, beispielsweise durch große Vögel, beschädigt oder gar zerstört werden. Infolge eines Schaufelbruchs abgetrennte Schaufelteile können das Triebwerk beschädigen oder bei einem Durchschlagen des Triebwerksgehäuses auch zu Schäden am Flugzeug selbst führen. Zur Vermeidung der durch einen Fanschaufelbruch verursachten Folgeschäden ist der Fan bekanntermaßen von einem Schutzgehäuse umgeben, das ein Durchschlagen der Schaufelbruchstücke durch das Triebwerk, aber auch dessen Beschädigung verhindern soll. Derartige Fan-Schutzgehäuse sind in verschiedenen Ausführungsformen beispielsweise aus Metallen, Faserverbundwerkstoffen oder einer Kombination aus Metallen und Faserverbundwerkstoffen gefertigt.

Die EP 1 674 671 beschreibt ein am Innenumfang des metallischen Triebwerksgehäuses angeordnetes Fan-Schutzgehäuse, das aus einer Mehrzahl in Umfangsrichtung ausgerichteter geflochtener Faserschichten und zwischen den Faserschichten ausgebildeten Kunstharzschichten besteht und sich neben seiner Schutzwirkung aufgrund des Fehlens metallischer Bestandteile auch durch ein vergleichsweise geringes Gewicht auszeichnet.

Die Schutzfunktion eines aus Faserverbundwerkstoffen ausgebildeten Fan-Schutzgehäuses, das sich durch hohe Steifigkeit und Strukturfestigkeit sowie geringe Herstellungskosten auszeichnet, ist jedoch bei aus Metall bestehenden Fanschaufeln insofern nicht ausreichend, als die Oberfläche an der Innenseite des aus Faserverbundmaterial bestehenden Sicherungsringes eine nicht ausreichende Härte und Festigkeit aufweist. Bei einem Schaufelbruch können daher abgetrennte Bruchstücke von metallischen Fanschaufeln aufgrund der hohen kinetischen Energie und der Punktbelastung an der Oberfläche des Faserverbundmaterials örtliche Schäden verursachen, die beim "windmilling" aufgrund der durch den Bruch bedingten Unwucht des Fan und durch in deren Folge auftretende Schwingungen des Triebwerksgehäuses verstärkt werden und zu einer vollständigen Zerstörung des aus Faserverbundmaterial bestehenden Schutzgehäuses führen können. Zudem können abgetrennte Bruchstücke einer beschädigten Fanschaufel in dem Verbundwerkstoff stecken bleiben, so dass noch weitere - nachfolgende - Fanschaufeln beschädigt werden können.

Der Erfindung liegt die Aufgabe zugrunde, einen aus einem Faserverbundwerkstoff bestehenden Sicherungsring für das Fangehäuse eines Gasturbinentriebwerks mit einem Schaufeln aus Metall oder Faserverbundstoff umfassenden Fan so auszubilden, dass bei einem Schaufelbruch die Faserstruktur des Sicherungsringes nicht zerstört wird und schwerwiegende Folgeschäden am Fangehäuse, den Fanschaufeln oder am Triebwerk verhindert werden.

Erfindungsgemäß wird die Aufgabe mit einem gemäß den Merkmalen des Patentanspruchs 1 ausgebildeten Sicherungsring gelöst. Weitere Merkmale und zweckmäßige Ausgestaltungen der Erfindung ergeben sich aus den Unteransprüchen.

Die Erfindung geht von einem zumindest teilweise aus Faserverbundwerkstoff (Hybrid) bestehenden Sicherheitsring für das Fangehäuse aus. Um insbesondere auch beim Einsatz von aus einem metallischen Werkstoff bestehenden Fanschaufeln aufgrund einer zum Beispiel durch Fremdkörper oder Ermüdung bewirkten Abtrennung von Schaufelteilen auftretende Folgeschäden möglichst gering zu halten, ist auf dem Faserverbundmaterial eine Abdeckung aus keramischem Material angeordnet. Beim Aufprall eines Schaufelteils wirkt auf das Faserverbundmaterial keine Punktlast, sondern eine die Kräfte verteilende Flächenlast. Durch die Bildung zunächst eines Rissnetzwerks in der Abdeckung und das anschließende Zerfallen des keramischen Materials in kleine Teilchen oder gar in die bei der Herstellung versinterten Ausgangspartikel kann die keramische Abdeckung einen erheblichen Teil der kinetischen Energie des aufprallenden Schaufelteils aufnehmen. Das zerstörte, in kleine Teilchen zerlegte keramische Material wird - ohne weiteren Schaden anrichten zu können - nach hinten ausgeblasen. Die bei Verwendung eines ganz oder teilweise aus Faserverbundmaterial bestehenden Sicherheitsringes infolge einer Beschädigung eines insbesondere mit Metallschaufeln bestückten Fan üblicherweise zu erwartenden Folgeschäden werden dadurch im Wesentlichen verhindert.

Gemäß einem weiteren Merkmal der Erfindung besteht die Abdeckung aus einzelnen Keramikplatten, und zwar vorzugsweise in einer Form, bei der die Plattenkanten in stumpfem Winkel aneinander stoßen. Vorzugsweise haben die Keramikplatten eine sechseckige Form.

Die Keramikplatten sind mittels eines duktilen Klebers mit dem Ring aus Faserverbundwerkstoff verklebt und die Fugen sind mit dem duktilen Kleber verfüllt. Die Fugen sind vorzugsweise so ausgerichtet, dass sie nicht in Laufrichtung der Fanschaufeln verlaufen. In Ausgestaltung der Erfindung können die Keramikplatten auch in Gummi eingebettet sein. Die duktile Einbettung der Keramikplatten dient zur Entkopplung der bei einer Schlagwirkung auftretenden Schockwellen. Der Gesamtaufbau aus Faserverbundmaterial und den in ein duktiles Material eingebetteten Keramikplatten zeichnet sich durch hervorragendes Dämpfungsverhalten aus. Dazu tragen auch am Sicherungsring aus Faserverbundmaterial optional angeformte Versteifungsrippen bei.

Gemäß einer besonders bevorzugten Ausführungsform der Erfindung haben die Keramikplatten eine ballig ausgebildete Oberfläche, so dass abgetrennte Schaufelteile nicht auf die Kanten, sondern mittig auf die Keramikplatten treffen.

Als keramisches Material werden Siliziumkarbid oder Aluminiumoxid oder auch Borkarbid verwendet.

In weiterer Ausbildung der Erfindung besteht der mit dem keramischen Material abgedeckte Faserverbundring vorzugsweise aus gewickelten, in eine Polymermatrix eingebundenen Kohlenstoff- und Glasfasern, wobei im Wechsel angeordnete Glas- und Kohlenstofffaserstränge ein einstückig gewickeltes Flechtwerk aus sich kreuzenden und überdeckenden Wickellagen bilden. Zur Herstellung kann aber auch nach anderen bekannten Verfahren, beispielsweise mit vorimprägnierten Matten, durch Harzinfiltration und dgl. erfolgen. Gleichermaßen können auch andere bekannte Fasern und Faserkombinationen eingesetzt werden.

Ein Ausführungsbeispiel der Erfindung wird anhand der Zeichnung näher erläutert. Es zeigen:
- Fig. 1: eine schematische Darstellung eines Fan-Gasturbinentriebwerks mit einem in das Fangehäuse integrierten Sicherungsring;
- Fig. 2: eine Schnittansicht eines aus Faserverbundmaterial bestehenden Sicherungsrings mit keramischer Abdeckung an der zu den Fanschaufeln weisenden Innenfläche;
- Fig. 3: eine vergrößerte Schnittansicht des Sicherungsringes; und
- Fig. 4: eine Draufsicht auf einen Teil der Innenfläche des Sicherungsringes.

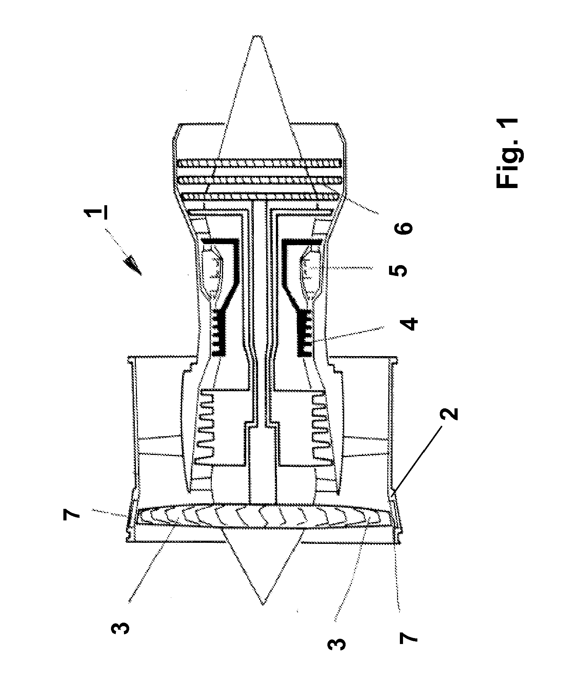

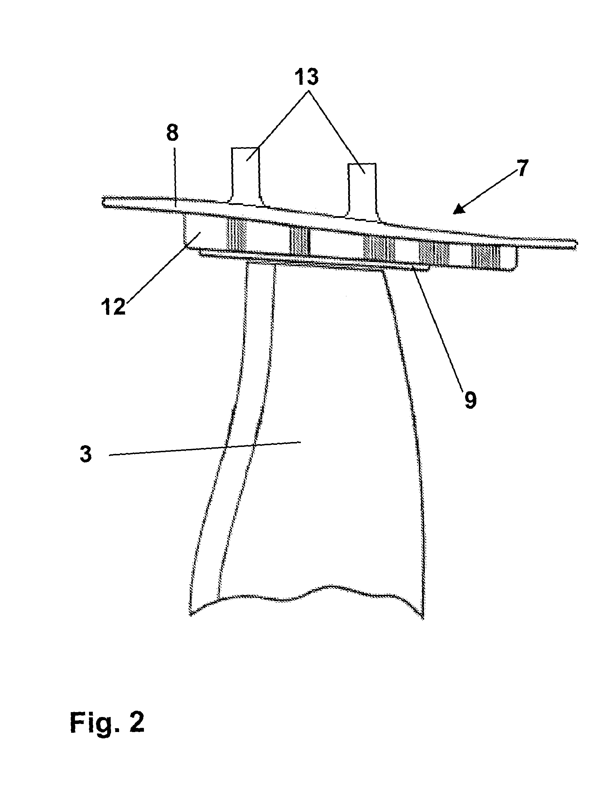

Das in Fig. 1 dargestellte Fan-Gasturbinentriebwerk 1 umfasst im Wesentlichen den vom Fangehäuse 2 umgebenen Fan mit aus Titan bestehenden Fanschaufeln 3 sowie einen Verdichter 4, eine Brennkammer 5 und eine Turbine 6. Zum Schutz des Fangehäuses 2 ist an dessen Innenumfang ein in Fig. 2 als Teilschnitt und vergrößert dargestellter Sicherungsring 7 angebracht. Von den Fanschaufeln 3 infolge auftreffender Fremdkörper oder anderweitig abgetrennte Bruchstücke werden vom Triebwerksgehäuse ferngehalten und können axial abgeführt werden.

Der in Fig. 2 in vergrößerter Darstellung wiedergegebene Sicherungsring 7 besteht aus einem Faserverbundring 8 mit einer an dessen Innenfläche vorgesehenen Honigwabenstruktur 12 und einer daran befestigten keramischen Abdeckung 9.

Der Faserverbundring 8 ist gemäß dem vorliegenden Ausführungsbeispiel aus einem einstückigen, gewickelten Flechtwerk (nicht dargestellt) aus sich kreuzenden und gegenseitig überdeckenden Wickellagen gebildet. Ein Harz ist in das Flechtwerk infiltriert und auf dessen Oberfläche aufgebracht. Die vorzugsweise vorimprägnierten Wickellagen des Flechtwerks bestehen aus im Wechsel parallel angeordneten, aneinander grenzenden Glasfaser- und Kohlefasersträngen. An der Außenumfangsfläche des Faserverbundringes 8 sind integral mit diesem gewickelte Versteifungsrippen 13 vorgesehen, um ein Nachschwingen bei Schlageinwirkung auf den Faserverbundring bzw. Sicherungsring 7 zu verhindern.

Die keramische Abdeckung 9 besteht aus aneinander grenzenden Keramikplatten 10 aus Siliziumkarbid. Die Keramikplatten 10 sind sechseckig ausgebildet und so angeordnet, dass die Fugen 11 zwischen den benachbarten Keramikplatten 10 nicht in Laufrichtung der Fanschaufeln 3 verlaufen. Die Keramikplatten 10 sind mit einem duktilen Kleber 14 befestigt, wobei die zwischen den Keramikplatten 10 vorhandenen Fugen 11 zur Verbesserung des Dämpfungsverhaltens mit dem duktilen Kleber 14 ausgefüllt sind. An der zu den Fanschaufeln 3 weisenden Außenfläche sind die Keramikplatten 10 ballig ausgebildet.

Der Faserverbundring 8 zeichnet sich durch große Steifigkeit und Dämpfungswirkung, hohe Strukturfestigkeit und geringe Herstellungskosten aus, wobei der nach einem Schaden auftretende Rissfortschritt aufgrund der oben beschriebenen Faserstruktur vergleichsweise gering ist. Aufgrund der keramischen Abdeckung 9, 10 übt ein abgetrenntes, mit hoher kinetischer Energie auf den Sicherungsring 7 auftreffendes Schaufelteil keine Punktlast, sondern eine - über die Faserstruktur verteilte - Flächenlast auf das Faserverbundmaterial aus, so dass die Durchschlagfestigkeit (Schussfestigkeit) des Sicherungsringes 7 wesentlich erhöht wird.

In der keramischen Abdeckung wird beim Auftreffen eines abgetrennten metallischen Schaufelteils zunächst ein dem bei deren Herstellung versinterten Ausgangspulver entsprechendes Rissnetzwerk gebildet. Die Abdeckung kann dann kleine Teilchen zerfallen. Dadurch kann von der Abdeckung zum einen ein großer Teil der Aufprallenergie aufgenommen werden und zum anderen werden die kleinen Keramikfragmente aus dem Triebwerk ausgeblasen und können somit keinen Schaden anrichten. Aufgrund der Ausbildung der keramischen Abdeckung 9 aus einzelnen Keramikplatten 10 wird bei einer Schlagwirkung nur ein gegrenzter Teil der Abdeckung zerstört, während die nicht getroffenen Keramikplatten 10 unbeschädigt bleiben. Infolge der sechseckigen Form der Keramikplatten 10 sind die Fugen 11 nicht durchgehend, so dass die Angriffsfläche der in einem flachen tangentialen Winkel auf die Keramikplatten 10 auftreffenden Fanschaufelteile an den Kanten der Keramikplatten 10 gering ist.

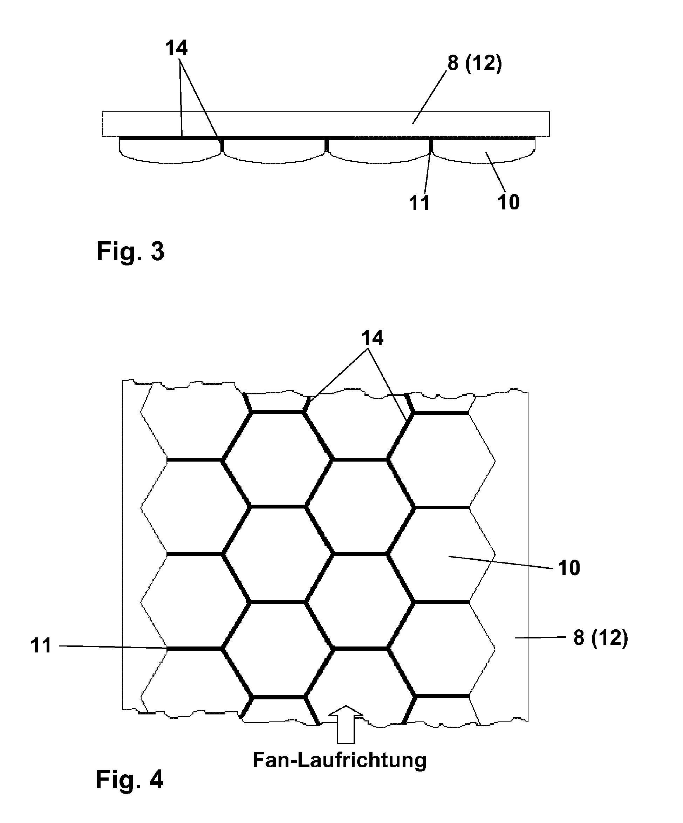

Wie Fig. 3 zeigt, sind die Keramikplatten 10 an der zu den Fanschaufeln 3 weisenden Innenfläche auch ballig ausgebildet, um zu verhindern, dass Fanschaufelteile auf die Kanten der Keramikplatten 10 oder die Fugen 11 treffen, sondern vielmehr mittig auf die Keramikplatten 10 aufschlagen und infolge dessen eine optimale Krafteinleitung in das keramische Material erzielt wird. Die Einbettung der Keramikplatten 10 in ein duktiles Material (Kleber, Gummi oder dgl.) trägt wesentlich zur Dämpfung bei Schlageinwirkung bei.

Die Erfindung ist nicht auf das oben beschriebene Ausführungsbeispiel beschränkt. Beispielsweise ist auch eine andere vieleckige Form der Keramikplatten oder die Verwendung eines anderen keramischen Materials, wie zum Beispiel Aluminiumoxid oder Borkarbid, denkbar. Der oben beschriebene Sicherungsring wird insbesondere bei Gasturbinentriebwerken eingesetzt, deren Fan mit aus Metall bestehenden Schaufeln ausgerüstet ist.

Bei einem aus Faserverbundwerkstoff bestehenden Schutzring für das Fangehäuse werden die durch ein metallisches Schaufelteil verursachten Schäden im Faserverbundmaterial deutlich verringert und Folgeschäden in Form von Rissfortschritt oder infolge stecken gebliebener Schaufelfragmente in dem Fasermaterial während des "windmilling" verhindert.

### Bezugszeichenliste

- 1: Fan-Gasturbinentriebwerk
- 2: Fangehäuse
- 3: Fanschaufeln
- 4: Verdichter
- 5: Brennkammer
- 6: Turbine
- 7: Sicherungsring
- 8: Faserverbundring
- 9: Keramische Abdeckung
- 10: Keramikplatten
- 11: Fugen
- 12: Honigwabenstruktur
- 13: Versteifungsrippen
- 14: duktiler Kleber, Gummi, duktiles Material

## Patentansprüche

1. Sicherungsring aus einem Faserverbundwerkstoff für das Fangehäuse (2) eines Gasturbinentriebwerks (1) mit einem insbesondere metallische Fanschaufeln (3) aufweisenden Fan, **gekennzeichnet durch** einen Faserverbundring (8), dessen zu den Fanschaufeln (3) weisende Innenfläche eine keramische Abdeckung (9) aufweist.

2. Sicherungsring nach Anspruch 1, **dadurch gekennzeichnet, dass** die keramische Abdeckung (9) aus versintertem Siliziumkarbid-Pulver oder Aluminiumoxid-Pulver oder Borkarbidpulver besteht.

3. Sicherungsring nach Anspruch 1 oder 2, **dadurch gekennzeichnet, dass** die Abdeckung aus einzelnen, über Fugen (11) aneinander grenzenden Keramikplatten (10) besteht.

4. Sicherungsring nach Anspruch 3, **dadurch gekennzeichnet, dass** die Keramikplatten (10) eine Form aufweisen, bei der die Plattenkanten in stumpfem Winkel aneinander stoßen.

5. Sicherungsring nach Anspruch 3, **dadurch gekennzeichnet, dass** die Keramikplatten (10) sechseckig ausgebildet sind.

6. Sicherungsring nach Anspruch 4, **dadurch gekennzeichnet, dass** die Keramikplatten (10) an der zu den Fanschaufeln (3) weisenden Oberfläche ballig ausgebildet sind.

7. Sicherungsring nach Anspruch 3, **dadurch gekennzeichnet, dass** die Keramikplatten (10) am Innenumfang des Sicherungsringes (7) mittels eines duktilen Klebers (14) verklebt und die Fugen (11) mit dem duktilen Kleber (14) verfüllt sind.

8. Sicherungsring nach Anspruch 3, **dadurch gekennzeichnet, dass** die Keramikplatten (10) in eine Gummimatte eingebettet sind, derart, dass die Fugen (11) mit Gummi ausgefüllt sind.

9. Sicherungsring nach Anspruch 3, **dadurch gekennzeichnet, dass** die Fugen (11) quer oder schräg zur Laufrichtung der Fanschaufeln (3) verlaufen.

10. Sicherungsring nach Anspruch 1, **dadurch gekennzeichnet, dass** der Faserverbundring aus Kohlenstoff-, Glas-, Polyäthylen- oder Aramidfasern oder verschiedenen Kombinationen aus diesen besteht und durch Wickeln, Flechten, Stricken und infiltrieren von Kunstharz oder aus vorimprägnierten Matten hergestellt ist.

11. Sicherungsring nach Anspruch 10, **dadurch gekennzeichnet, dass** am Außenumfang des Faserverbundringes (8) integral angeformte Versteifungsrippen (13) aus Faserverbundmaterial angeordnet sind.

12. Sicherungsring nach Anspruch 10, **dadurch gekennzeichnet, dass** der Faserverbundring (8) aus gewickelten, in eine Polymermatrix eingebundenen Kohlenstofffasern und Glasfasern besteht.

13. Sicherungsring nach Anspruch 10, **dadurch gekennzeichnet, dass** die Kohlenstoff- und Glasfasern ein einstückig gewickeltes Flechtwerk aus sich kreuzenden und überdeckenden Wickellagen bilden, die aus im Wechsel und parallel angeordneten, aneinander grenzenden Glasfaser- und Kohlenstofffasersträngen ähnlicher Stärke bestehen.
